# EUROPÄISCHE PATENTSCHRIFT

(11) **EP 0 918 996 B1**
(45) Veröffentlichungstag und Bekanntmachung des Hinweises auf die Patenterteilung: **03.09.2003**
(21) Anmeldenummer: 98910619.0
(22) Anmeldetag: 12.02.1998
(51) Int. Cl.: G01P 3/487

(54) **MOTOR MIT DREHZAHLABGRIFF ÜBER EINEN HALL-SENSOR**
MOTOR WITH SPEED OF ROTATION DETECTED BY A HALL SENSOR
MOTEUR A REGIME DETECTE PAR UN CAPTEUR DE HALL

(30) Priorität: 12.03.1997 DE 19710015
(43) Veröffentlichungstag der Anmeldung: 02.06.1999
(73) Patentinhaber: ROBERT BOSCH GMBH, 70442 Stuttgart (DE)
(72) Erfinder: WIESLER, Martin, D-76534 Baden-Baden (DE)
(86) Internationale Anmeldenummer: DE9800393
(87) Internationale Veröffentlichungsnummer: WO98040751

(56) Entgegenhaltungen:
- EP-A- 0 359 853
- DE-A- 3 634 214
- US-A- 4 385 276
- US-A- 4 857 784
- US-A- 5 565 721

## Beschreibung

### Stand der Technik

Die Erfindung geht von einem Motor aus, bei dem mittels eines Hall-Sensors Signale von einer Welle abgegriffen werden, gemäß den Merkmalen des Oberbegriffs des Patentanspruchs 1.

Ein derartiger Motor ist aus der DE 43 26 391 A1 bekannt. Der Motor ist ein Gleichstrommotor mit einem Kommutator und besitzt ein Motorgehäuse und einen in zwei Drehrichtungen antreibbaren Rotor mit einer Rotorwelle. Die Rotorwelle ist in zwei Lagerschildern gelagert, die das Motorgehäuse zu zwei Seiten nach außen abschließen. Auf der Rotorwelle ist ein 2-poliger Magnet-Läuferkörper fest angebracht. Ein Hall-Sensor ist auf einer als Montagebaustein ausgebildeten Leiterplatte angeordnet, die von außen in eine Ausnehmung des Lagerschildes eingesteckt wird. Die Ausnehmung besitzt eine Bodenfläche, die eine geschlossene, vertiefte Kammer aufweist. Die Kammer steht an der Innenseite des Lagerschilds vor und besitzt eine Kammerwand, die dem Magnet-Läuferkörper gegenüber liegt. Der Hall-Sensor ist hinter der Kammerwand in der Höhe des Magnet-Läuferkörpers angeordnet und tastet Signale des Magnet-Läuferkörpers ab. Auf der zum Magnet-Läuferkörper weisenden Leiterplattenvorderseite sind elektrische Bauelemente, wie Hall-Sensor, Widerstand usw., angeordnet. Versorgungs- und Signalleitungen der elektrischen Bauelemente, sind im Bereich ihrer Anschlußenden von der Vorderseite zur Rückseite der Leiterplatte in Ausnehmungen der Leiterplatte geführt, wobei die abisolierten Anschlußenden durch Durchtrittsöffnungen von der Vorderseite zu der Rückseite der Leiterplatte zum Kontaktieren mit Leiterbahnen auf der Rückseite durchgesteckt sind. Die Versorgungs- und Signalleitungen werden durch einen Isolierschlauch geführt und sind mit einem Steckhülsengehäuse verbunden, welches mit der Leiterplatte eine Montageeinheit bildet.

Durch die zusätzliche Kammer, die am Innenrand des Lagerschilds hervorsteht, wird ein größerer Bauraum benötigt. Ein Lagerschild mit einer derartigen Kammer und den daraus folgenden Abmessungen wird sinnvoll nur bei Motoren mit einem Hall-Sensor eingesetzt. Der Magnet-Läuferkörper besitzt einen großen Abstand vom Hall-Sensor, indem er hinter der Kammerwand angeordnet ist. Dies bedingt einen großen Bauraum. Außerdem muß der Magnet stärker ausgelegt werden, um die Signale über den großen Abstand und durch die Kammerwand abzugreifen. Durch einen stärkeren Magneten steigt der Bauraum und das Gewicht an, so daß dieser verstärkt auf die Rotation der Welle wirkt und eine erhöhte Energie zum Antrieb benötigt wird. Indem Versorgungs- und Signalleitungen durch einen Isolierschlauch und zugentlastet in Ausnehmungen geführt sind, muß zum einen ein erhöhter Montageaufwand betrieben werden und zum anderen steigen durch die vielen Einzelteile der Bauraum, das Gewicht und die Kosten an.

Der Motor wird insbesondere als Antriebsmotor für Fensterheber, Schiebedachbetätigung, Sitzverstellung, Spiegelverstellung usw. in Kraftfahrzeugen verwendet. Speziell in diesen Anwendungsbereichen ist eine kleine und leichte Bauform gefragt.

Aus der DE 36 34 214 A1 ist ein Elektromotor mit einem Kommutator bekannt. Er besitzt ein aus Isoliermaterial bestehendes Bauteil, das als Trägerbauteil für zum Betrieb des Motors vorgesehene Bauelemente und leiterbahnartige elektrische Verbindungen zum Herstellen einer motorinternen Verdrahtung ausgebildet ist. Das Trägerbauteil hat die Form eines wannenartigen Gehäuses mit hochgezogenen Seitenwänden, welches mit seiner Bodenplatte dem Antriebsmotor zugekehrt ist und dessen Öffnung abdeckt. An der dem Motor zugewandten Seite der Bodenplatte ist ein Bürstenhalter angeformt, während auf der anderen Seite der Bodenplatte, in der Gehäusewanne ein Tachogenerator angeordnet ist, an dessen Stelle auch andersartig ausgebildete Bauelemente zur Drehzahlabnahme, z. B. ein Hallgenerator, treten kann. Im Bereich des Tachogenerators hat die Bodenplatte eine Durchgangsbohrung, durch welche eine Läuferwelle oder ein Kollektor des Motors ragt. Die Bodenplatte übergreift einen vorzugsweise stegförmigen Lagerträger. Ein Deckelteil, das durch eine Leiterplatte gebildet werden kann, schließt die Gehäusewanne des Trägerbauteils an der offenen Stirnseite.

Aus der US 4,385,276 ist ein Elektromotor mit einem Kommutator bekannt. Eine über den Kommutator vorstehende Motorwelle ist in einem Lagerträger mittels eines Gleitlagers gelagert. Ein im Querschnitt u-förmiges, wannenartiges Ringteil umgreift mit seiner Bodenplatte den Lagerträger, so dass eine Verlängerung der Motorwelle durch die Bodenplatte in die Wanne des Ringteils hineinragt. Auf der Verlängerung der Motorwelle sitzt formschlüssig ein Magnet-Läuferkörper, der einen Kunststoffträger aufweist. Dieser besitzt an einem radial gerichteten Finger eine Aussparung, in die ein Permanentmagnet eingesetzt ist. In einem radialen Abstand zur Umlaufbahn des Permanentmagneten ist in das Ringteil eine Leiterplatte eingesetzt, an der ein Hallsensor befestigt ist. Dieser ist dem Permanentmagneten zugewandt und erzeugt bei jeder Umdrehung des Permanentmagneten ein Signal.

### Vorteile der Erfindung

Der erfindungsgemäße Motor mit den Merkmalen des Hauptanspruchs hat den Vorteil, dass Lagerdeckel und Bürstenhalter ein Teil bilden. Durch das eine Spritzteil werden Bauraum, Fertigungs- und Montageaufwand und Kosten eingespart, insbesondere weil nur eine Form für ein Spritzteil benötigt wird. Wird ein Bürstenhalter, der gleichzeitig den Lagerdeckel bildet, auf die Welle des Motors geschoben, entsteht das Problem, dass ein Hilfskonus benötigt wird, um beim Einschieben die Bürsten auseinander zu schieben. Der Hilfskonus kann aber nicht mehr von der Welle gezogen werden, da der integrierte Lagerdeckel dies verhindert. Das Problem wird entweder mit speziellen Haltevorrichtungen gelöst oder vorzugsweise mit einem Teil, das ohne Funktion nach der Montage im Motorgehäuse verbleibt. Wird nun der Magnet-Läuferkörper erfindungsgemäß zwischen Lager und Kommutator, vor den Bürsten angeordnet und besitzt er eine Abschrägung, die als Anlaufkegel dient, kann auf dieses zusätzliche Teil verzichtet werden. Der Magnet-Läuferkörper dient also dazu, die Bürsten bei der Montage auseinander zu schieben und anschließend als Signalgeber für den Hallsensor. Die Bauteilanzahl wird nicht erhöht. Befindet sich der Magnet-Läuferkörper vor den Bürsten und unmittelbar hinter einem Lager im Lagerdeckel, erhält er noch eine dritte Funktion, indem er die Welle mit seiner Stirnseite in axialer Richtung abstützt, solange noch kein Getriebe am Motor angeschlossen ist.

Der Magnet-Läuferkörper besteht aus einem Träger aus Kunststoff, auf dem der Magnet aufgespritzt ist. Der Magnet-Läuferkörper wird mit einem Presssitz auf der Welle fixiert. Hierdurch wird die Montage erleichtert. Außerdem wird kein Klebstoff benötigt, um den Magnet-Läuferkörper zu fixieren. Kleben stellt in der Regel einen aufwendigen und unangenehmen Arbeitsgang dar, insbesondere in automatisierten Abläufen. Zudem kann der Presssitz so gewählt werden, dass er die erforderlichen tangentialen und axialen Kräfte aufnimmt, jedoch der Magnet-Läuferkörper beispielsweise bei Verschleiß wieder leicht abgezogen werden kann. Kunststoff bewirkt, dass ein an für sich spröder Magnet mit Presssitz befestigt werden kann, weil weicher Kunststoff die durch die Pressung erzeugten Spannungen aufnimmt. Dadurch ist vermieden, dass der Magnet durch mechanische Spannungen reißt. Dies wird vorzugsweise mit einer sich nach einem zylindrischen Abschnitt erweiternden Bohrung des Kunststoffträgers erreicht. Der Kunststoff wird mit erhöhter Spannung aufgepresst, so dass in sämtlichen Betriebstemperaturen die Spannung im Kunststoff ausreicht, um die erforderliche Haftreibungskraft auf der Welle zu erzeugen und damit den Magnet-Läuferkörper zu fixieren.

Der Magnet-Läuferkörper besitzt einen 2-poligen Magneten, z.B. auf Basis von Neodym-Eisen-Bor, mit einem Kunststoffanteil. Durch den Werkstoff Neodym kann die gleiche Wirkung mit sehr viel kleineren Abmessungen erreicht werden wie bei herkömmlichen Ferritmagneten. Der Magnet-Läuferkörper wird kleiner und leichter und erzeugt damit ein kleineres Schwungmoment.

Besitzt der Magnet-Läuferkörper die gleiche Größe, wie ein Anlaufkegel der ohne Hallsensor verwendet wird, bleibt der Bauraum gleich groß, und die Gewichtszunahme ist zu vernachlässigen.

Sitzt der Hallsensor unmittelbar bei dem Magnet-Läuferkörper, d.h. in möglichst geringem Abstand und ohne eine Zwischenwand, können die Signale besser empfangen werden, es wird von Grund auf weniger Platz benötigt und der Magnet kann schwächer ausgelegt werden. Er ist dadurch kleiner, leichter und kostengünstiger.

Indem der Hallsensor parallel zur Wellenachse ausgerichtet ist, können axiale Bewegungen der Welle ausgeglichen werden, da die Signale in axialer Richtung wegen der Magnetbreite über einen größeren Bereich in annähernd gleicher Stärke empfangen werden können.

Zweckmäßigerweise wird der Hallsensor, der ein Hall-IC ist, mit einem SMD-Verfahren auf der Leiterplatte aufgebracht. Das SMD-Verfahren ist ein Oberflächenschmelzverfahren, nach dem der Hallsensor flach auf der Leiterplatte aufliegt, im Gegensatz zum konventionellen Verfahren, bei dem der Sensor auf Kontaktfüßen steht. Hierdurch kann flacher gebaut werden und der Hallsensor und insbesondere die Kontakte des Hallsensors, mit denen er auf der Leiterplatte aufgebracht ist, sind unempfindlicher gegen Zerstörung oder Positionsverschiebung, da z.B. ein Abknicken nicht mehr möglich ist. Durch die flache Bauweise können flache, bestehende Zwischenräume genutzt werden, um die Leiterplatte anzuordnen.

### Zeichnung

In der Zeichnung sind Ausführungsbeispiele der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu weiteren sinnvollen Kombinationen zusammenfassen.
Es zeigt:
- Fig. 1: einen Schnitt durch einen Motor,
- Fig. 2: eine Ansicht eines Bürstenhalters mit einem Hallsensor,
- Fig. 3: einen Schnitt durch einen Bürstenhalter mit einem Hallsensor, kontaktiert mit Lötstiften,
- Fig. 4: einen Schnitt durch einen Bürstenhalter mit einem Hallsensor, kontaktiert mit Kontaktschuhen,
- Fig. 5: einen Magnet-Läuferkörper.

### Beschreibung der Ausführungsbeispiele

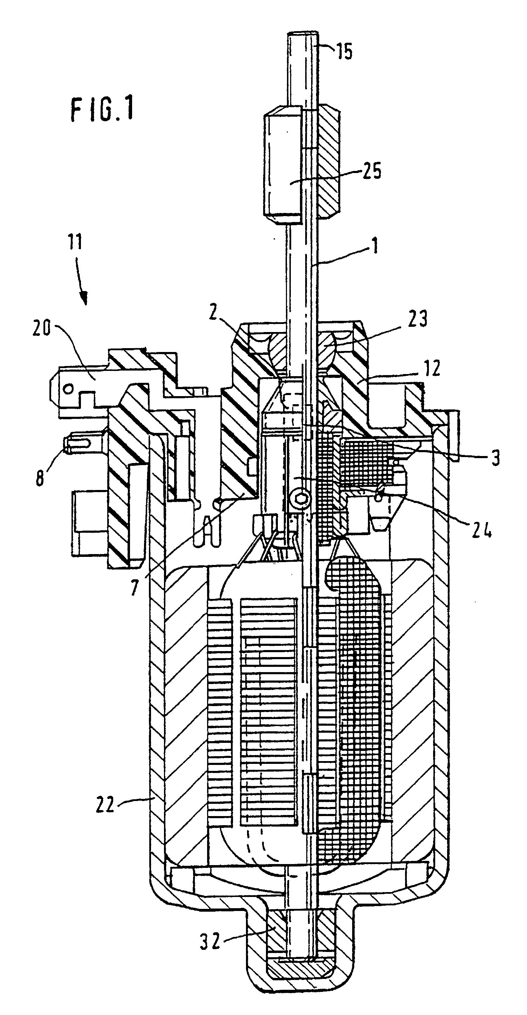

In Figur 1 ist beispielsweise ein Gleichstrommotor mit einem Kommutator 24 dargestellt. Die Erfindung trifft auch auf Wechselstrom und Drehstrommotoren zu, jedoch sind Gleichstrommotoren besonders geeignet für den Einsatz als Fensterheber, Schiebedachbetätigung, Sitzverstellung, Spiegelverstellung usw..

Der Motor hat eine Welle 1, die in einem Motorgehäuse 22 in Lager 23, 32 gelagert ist. Sie besitzt ein Zahnrad 25, über die ein nicht dargestellter Mechanismus angetrieben wird. Das Motorgehäuse 22 ist auf einer Seite geschlossen und auf einer Seite zur Montage der inneren Teile des Motors offen. Die offene Seite wird durch einen Lagerdeckel 12 verschlossen, der gleichzeitig einen Bürstenhalter 7 bildet. Im Lagerdeckel 12 befindet sich ein Lager 23, vorzugsweise ein Kalottenlager.

Auf der Welle 1 ist ein Magnet-Läuferkörper 2 zwischen dem Kommutator 24 und dem Lager 23 mit einem Preßsitz 18 gelagert. Durch die Stirnseite 21 des Magnet-Läuferkörpers 2 wird die Welle 1 axial am Lager 23 abgestützt, sofern noch kein Mechanismus am Zahnrad 25 angeschlossen ist. Auf dem Magnet-Läuferkörper 2 ist ein 2- oder mehrpoliger Magnet 16 angeordnet, der bei einer Umdrehung, bezogen auf einen Punkt am Umfang, zwei Magnetimpulse erzeugt. Diese werden von einem Hall-Sensor 3 abgegriffen, der mit geringem Spiel zum Magnet 16 angeordnet ist.

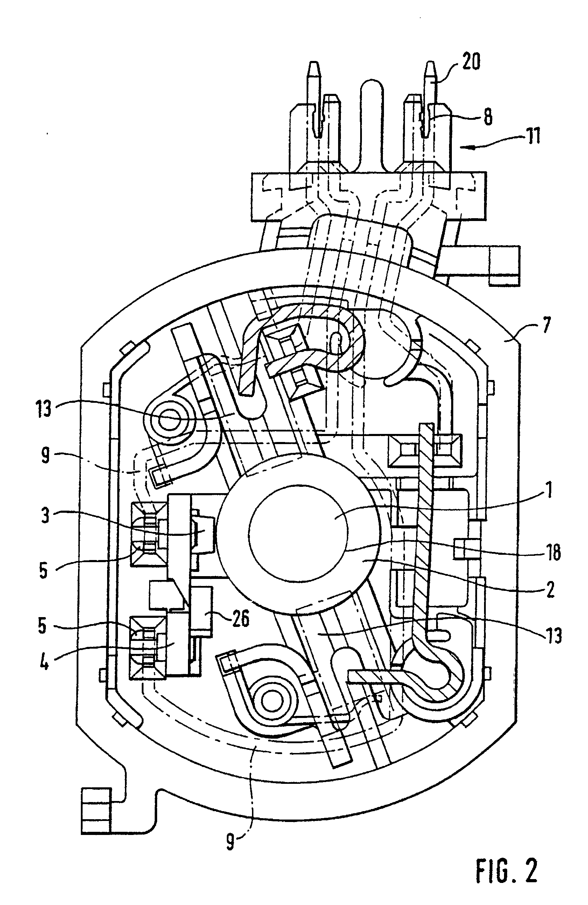

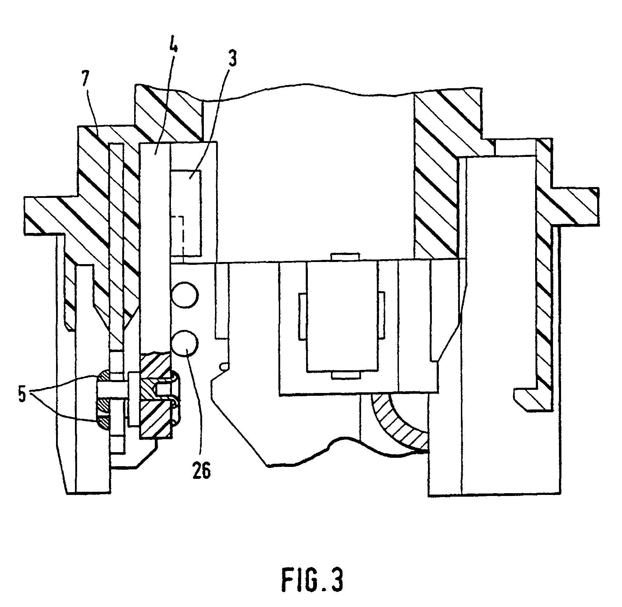

In Figur 2 und 3 ist der Bürstenhalter 7 dargestellt, in dem eine Leiterplatte 4 integriert ist, auf der der Hall-Sensor 3 angeordnet ist. Am Bürstenhalter 7 bzw. Lagerdeckel 12 ist ein Stecker 11 angeformt. Dieser besitzt Leistungskontakte 20, durch die der Motor bzw. seinen Bürsten 13 mit Strom versorgt werden. Ferner hat der Stecker 11 Kontakte 8, mit denen die Leiterplatte 4 durch Versorgungs- und Signalleitungen 9 und Lötstiften 5 oder Kontaktschuhen 6 verbunden ist. Die Versorgungs- und Signalleitungen 9 sind in den Bürstenhalter 7 eingegossen oder eingesteckt.

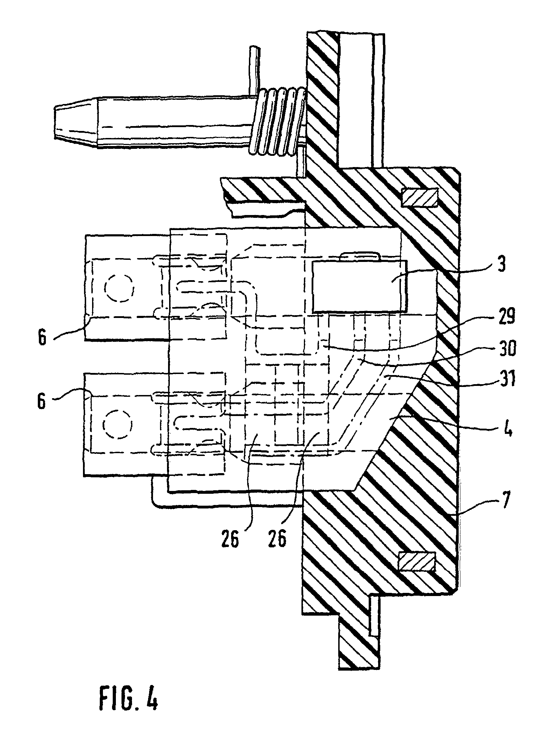

Figur 4 zeigt, daß der Hall-Sensor 3 Anschlüsse hat, die mit drei Leiterbahnen 29, 30, 31 verbunden sind. Die Leiterbahn 29 führt vom Kontaktschuh 6 zum Hall-Sensor 3 und ist über zwei parallel geschaltete Widerstände 26 mit der Leiterbahn 31 verbunden. Die Leiterbahn 30 führt vom Hall-Sensor 4 unter den Widerständen 26 zum zweiten Kontaktschuh 6. Rotiert die Welle 1, so werden Signale, die durch den Hall-Effekt entstehen, vom Hall-Sensor 3 erfaßt. Diese werden von einer am Stecker 11 angeschlossenen Steuereinheit, die nicht dargestellt ist, ausgewertet. Die Steuereinheit registriert die eingegangenen Signale pro Zeiteinheit, wodurch die Drehzahl der Welle 1 bestimmt ist. Ferner erfaßt die Steuereinheit wie der Motor angeschlossen ist, und bestimmt daraus die Drehrichtung des Motors. Somit werden Drehzahl und Drehrichtung erfaßt, wobei die Drehrichtung, insbesondere bei Fensterhebern, von Bedeutung ist, so daß das Fenster definiert geschlossen und geöffnet werden kann. Ferner können an Drehzahlschwankungen beispielsweise Hindernisse erkannt und ein Einklemmschutz geschaffen werden.

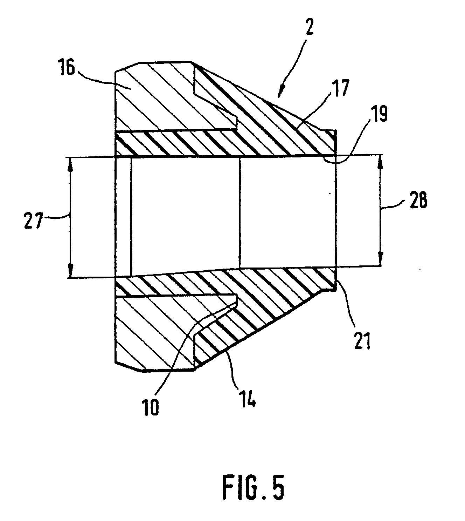

In Figur 5 ist der Magnet-Läuferkörper 2 im Schnitt dargestellt. Er besteht aus einem Träger 17, der aus Kunststoff gebildet wird und zu einer Seite einen Abschrägung 14 besitzt, die mit einer Stirnseite 21 abschließt, und zur anderen Seite eine keilförmige Aussparung 14 hat. Auf dem Träger 17 ist auf der Seite der keilförmigen Aussparung 14 ein 2-poliger Magnet 16 aufgespritzt. Die keilförmige Aussparung 14 bewirkt eine gute Verbindung zwischen Magnet 16 und Träger 17. Der Träger 17 besitzt eine Innenbohrung 19, die sich nach einem zylindrischen Teil konisch erweitert, so daß die Innenbohrung mindestens zwei Durchmesser 27, 28 hat. Der Durchmesser 27 auf der Seite des Magneten 16 ist größer wie der Durchmesser 28 auf der anderen Seite.

## Patentansprüche

1. Elektrisch betriebener Motor mit einem Magnet-Läufekörper (2), der im Betrieb zwischen einem Kommutator (24) und einem Lager (23) einer Welle (1) auf der Welle (1) sitzt und dessen Drehzahl von einem Hallsensor (3) abgreifbar ist, der auf einer in einem Bauteil (7) des Motors integrierten Leiterplatte (4) angeordnet ist, wobei das Bauteil (7), in dem Kontakte (8), Versorgungs- und Signalleitungen (9) für die Leiterplatte (4) eingespritzt und/oder eingesteckt sind, als Bürstenhalter (7) ausgebildet ist und das Motorgehäuse (22) stirnseitig abschließt, **dadurch gekennzeichnet, dass** der Magnet-Läuferkörper (2) eine als Anlaufkegel nutzbare Abschrägung (14) aufweist, welche so ausgebildet ist, daß während der Montage beim Aufschieben des Bürstenhalters (7) auf die Welle (1) die Bürsten (13) auseinander geschoben werden.

2. Motor nach Anspruch 1, **dadurch gekennzeichnet, dass** der Magnet-Läuferkörper (2) einen Kunststoffträger (17) aufweist, an dem die Abschrägung (14) angeformt und auf den ein Ringmagnet (16) aufgespritzt ist, der mit seiner Außenkontur an die der Abschrägung (14) des Kunststoffträgers (17) anschließt.

3. Motor nach Anspruch 2, **dadurch gekennzeichnet, dass** der Kunststoffträger (17) durch einen Presssitz (18) auf der Welle (1) fixiert ist und ausschließlich eine Pressung besitzt.

4. Motor nach Anspruch 3, **dadurch gekennzeichnet, dass** der Kunststoffträger (17) eine abgesetzte Innenbohrung (19) besitzt, deren größerer Durchmesser (27) auf der Seite des Ringmagneten (16) liegt.

5. Motor nach einem der Ansprüche 2 bis 4, **dadurch gekennzeichnet, dass** der Ringmagnet (16) Neodym enthält.

## Claims

1. Electrically powered motor having a magnetic rotor body (2) which, during operation, is seated on a shaft (1) between a commutator (24) and a bearing (23) for the shaft (1), and whose rotation speed can be tapped off by a Hall sensor (3) which is arranged on a printed circuit board (4) which is integrated in a component (7) of the motor, with the component (7) (in which contacts (8), supply and signal lines (9) for the printed circuit board (4) are injection-moulded and/or inserted) being in the form of a brush holder (7), and closing the motor housing (22) at the end, **characterized in that** the magnetic rotor body (2) has an incline (14) which can be used as a run-on cone, which is designed such that the brushes (13) are pushed apart from one another when the brush holder (7) is pushed onto the shaft (1) during the assembly process.

2. Motor according to Claim 1, **characterized in that** the magnetic rotor body (2) has a plastic mount (17) on which the incline (14) is integrally formed and on which a ring (16) is sprayed, whose external contour is adjacent to that of the incline (14) on the plastic mount (17).

3. Motor according to Claim 2, **characterized in that** the plastic mount (17) is fixed on the shaft (1) by means of a push-fit (18), and is subject exclusively to pressure.

4. Motor according to Claim 3, **characterized in that** the plastic mount (17) has a stepped internal hole (19), whose larger diameter (27) is on the side of the ring magnet (16).

5. Motor according to one of Claims 2 to 4, **characterized in that** the ring magnet (16) contains neodymium.

## Revendications

1. Moteur électrique avec un induit magnétique (2) monté sur un arbre (1) entre un collecteur (24) et un palier (23) de cet arbre et dont la vitesse peut être détectée par un capteur Hall (3) monté sur un circuit imprimé (4) intégré à un composant (7) du moteur, composant (7) dans lequel sont injectés ou emmanchés des contacts (8) des conducteurs (9) d'alimentation et de signaux de circuit imprimé (4), étant constitué sous la forme d'un porte-balais (7) et obture frontalement le boîtier (22) du moteur,
**caractérisé en ce que**
l'induit magnétique (2) présente un chanfrein (14) utilisable comme rampe conique d'accès et constituée de manière qu'au montage, quand on fait coulisser le porte-balais (7) sur l'arbre (1), les balais (13) coulissent séparément les uns des autres.

2. Moteur électrique selon la revendication 1,
**caractérisé en ce que**
l'induit magnétique (2) présente un support en plastique (17) sur lequel est formé le chanfrein (14) et sur lequel est injecté un aimant annulaire (16) se raccordant par son contour externe au contour du chanfrein (14) du support en plastique (17).

3. Moteur électrique selon la revendication 2,
**caractérisé en ce que**
le support en plastique (17) est fixé par ajustage serré (18) sur l'arbre (1) et est exclusivement en compression

4. Moteur électrique selon la revendication 3,
**caractérisé en ce que**
le support en plastique (17) possède un alésage interne (19) étagé, avec son plus grand diamètre (27) du côté de l'aimant annulaire (16).

5. Moteur électrique selon une des revendications 2 à 4,
**caractérisé en ce que**
l'aimant annulaire (16) contient du néodyme.
